# FASCICULE DE BREVET EUROPEEN

(11) **EP 3 055 191 B1**
(45) Date de publication et mention de la délivrance du brevet: **21.02.2018**
(21) Numéro de dépôt: 14793218.0
(22) Date de dépôt: 25.09.2014
(51) Int. Cl.: B62D 21/15, B60R 19/34, B60R 19/26, B62D 25/08

(54) **VEHICULE AUTOMOBILE AVEC BRAS DE DEFORMATION D'UN DES BRANCARDS EN CAS D'IMPACT AVANT**
KRAFTFAHRZEUG MIT BÜGEL ZUM VERFORMEN EINER DER SEITENLEISTEN BEI EINEM FRONTALAUFPRALL
MOTOR VEHICLE WITH ARM FOR DEFORMING ONE OF THE SIDE RAILS IN THE EVENT OF A FRONTAL IMPACT

(30) Priorité: 09.10.2013 FR 1359765
(43) Date de publication de la demande: 17.08.2016
(73) Titulaire: PSA Automobiles SA, 78300 Poissy (FR)
(72) Inventeur: PERU, Marc, F-92290 Chatenay-Malabry (FR); ZEITOUNI, Richard, F-78390 Bois D'arcy (FR)
(86) Numéro de dépôt international: PCT/FR2014/052401
(87) Numéro de publication internationale: WO 2015/052401

(56) Documents cités:
- DE-A1-102010 009 094
- US-A1- 2009 140 546
- US-A1- 2009 322 123

## Description

L'invention a trait à l'absorption de chocs à l'avant d'un véhicule automobile. Plus particulièrement, l'invention a trait à une structure avant de véhicule ainsi qu'à un véhicule apte à absorber des chocs avant. Le document US 2009/0140546 A1 divulgue une structure avant selon le préambule de la revendication 1. Un système ou dispositif d'absorption de chocs avant pour véhicule est classiquement constitué d'une poutre transversale fixée à deux profilés déformables en compression et couramment appelés « crashboxes ». Ces profilés déformables peuvent comprendre, chacun, une platine de fixation à la tête de brancard de la structure du véhicule. Les brancards sont les deux profilés structurels s'étendant parallèlement l'un à l'autre le long de la structure du véhicule. Les profilés déformables ou « crashboxes » sont conçus pour pouvoir se déformer en formant des plis à la manière d'un accordéon. Ce type de déformation est également couramment désigné « bottelage » dans la mesure où les profilés prennent une forme annelée après déformation qui ressemble à des bottes de foin liées.

Un dispositif d'absorption de chocs avant pour véhicule doit satisfaire à de nombreuses prestations, notamment des tests de choc frontal.

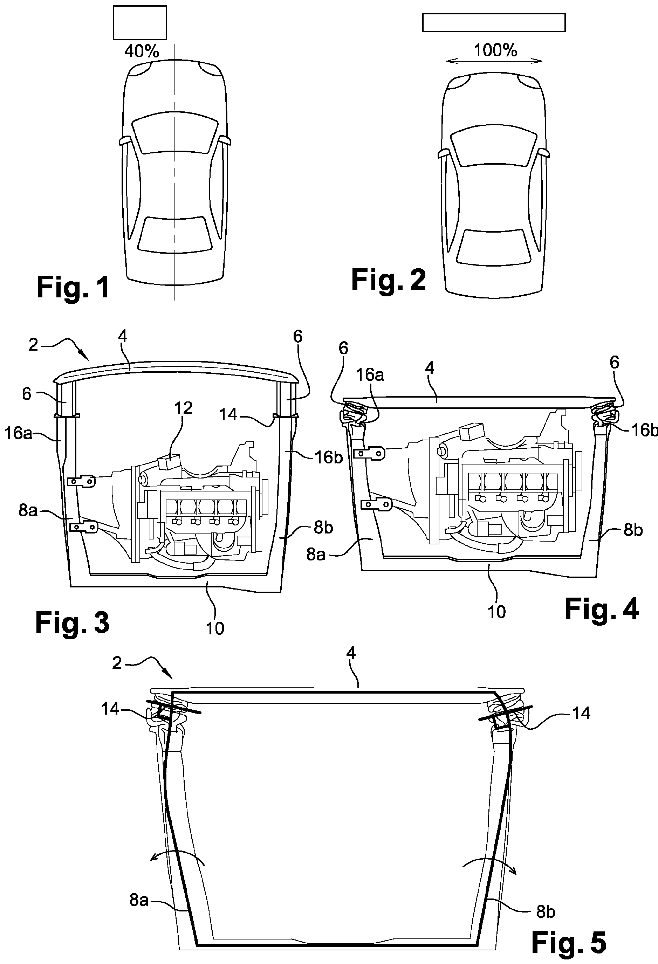

Parmi ces tests, on compte un test de choc frontal à 64 km/h avec recouvrement partiel contre une barrière composée d'une structure complexe qui représente la déformation «théorique» d'un bloc avant de voiture venant en sens inverse. Elle se compose notamment de panneaux en nid d'abeille. La figure 1 illustre ce test de choc. Le protocole est celui qui est utilisé actuellement par l'organisme European New Car Assessment Program (Euro NCAP). Ce test est à satisfaire aussi bien du côté gauche que du côté droit.

Un nouveau protocole de choc frontal à 50 km/h et 56 km/h avec 100% de recouvrement contre un mur rigide est en préparation. Il est susceptible d'être introduit dans le protocole Euro NCAP d'ici 2015. Ce test est illustré à la figure 2.

Il est donc souhaitable de satisfaire avec une bonne notation à ces deux protocoles de choc frontaux.

A l'occasion du choc décalé à 40%, un seul côté du véhicule heurte l'obstacle et l'obstacle est par ailleurs déformable. Le fait de devoir absorber toute l'énergie du choc sur le seul côté impacté accentue le risque d'intrusions à l'intérieur de l'habitacle de ce côté. En revanche, la déformation de la barrière filtre la décélération subie par le véhicule, que l'on peut traiter avec les moyens de retenue des occupants selon l'état de la technique.

A l'occasion d'un choc sans décalage sur un mur rigide, les deux côtés du véhicule travaillent de manière simultanée. L'énergie du choc est plus rapidement absorbée du fait de la raideur double représentée par les deux côtés du véhicule. De plus, l'impact est contre un mur rigide. La décélération subie par le véhicule est donc plus importante. La difficulté avec ce protocole se concentre essentiellement sur la loi de décélération du véhicule.

Le document de brevet publié US 4,836,321 divulgue une structure avant de véhicule essentiellement configurée pour absorber des chocs avec recouvrement partiel. En effet, elle comprend des câbles reliant les brancards au groupe motopropulseur du véhicule, de manière à permettre à ce dernier de participer à l'absorption d'un choc avec un obstacle décalé par rapport audit groupe. En cas d'impact avec recouvrement total, le groupe motopropulseur est destiné à absorber l'énergie de choc. Plus précisément, le groupe motopropulseur est disposé en ligne et sa partie arrière, en l'occurrence boîte de vitesses, est reliée à la structure du véhicule au moyen d'une traverse. Cet enseignement est intéressant dans la mesure où il propose une solution aux deux types de chocs frontaux mais n'est applicable qu'à un véhicule dont le moteur est disposé en ligne. De plus, les liaisons par câbles, compte tenu du fait qu'elles ne peuvent travailler qu'en traction, imposent des points de fixation assez reculés sur les brancards. Cela implique des déformations importantes de l'avant du véhicule avant que l'effet d'absorption de choc de ces moyens soit présent.

Le document de brevet publié DE 43 13 785 A1 divulgue également une structure avant de véhicule impliquant le groupe motopropulseur dans l'absorption d'énergie d'un choc frontal. En effet, le brancard de gauche, correspondant au côté conducteur du véhicule (en l'occurrence le brancard gauche), comprend un crochet dirigé vers l'arrière, et le groupe motopropulseur, en l'occurrence le moteur disposé en ligne, comprend un crochet correspondant dirigé vers l'avant et vers le crochet du brancard. Lors d'un choc frontal uniquement sur le côté conducteur du véhicule, le brancard va se déformer et son crochet va engager avec le crochet du moteur de manière à faire participer le groupe motopropulseur à l'absorption d'énergie. En cas de choc frontal avec recouvrement essentiellement total, la résistance du deuxième brancard (en l'occurrence le brancard droit) va s'ajouter au premier et peut alors générer des niveaux de décélération trop importants. Cet enseignement ne permet par conséquent pas de répondre aux deux types de choc frontal sans requérir l'ajout de moyens de retenue des passagers.

L'invention a pour objectif de proposer un dispositif d'absorption de chocs avant pour véhicule qui puisse satisfaire aux deux tests susmentionnés, plus particulièrement au test de choc frontal avec recouvrement de 40% sur un obstacle déformable et au test de choc frontal avec recouvrement total sur obstacle rigide.

L'invention a pour objet une structure avant de véhicule automobile, comprenant: deux profilés structurels longitudinaux s'étendant de manière essentiellement parallèle à l'avant du véhicule, avec des platines de fixation à leurs extrémités avant; un groupe motopropulseur disposé entre les deux profilés structurels longitudinaux; deux profilés déformables s'étendant, respectivement, dans le prolongement avant des profilés structurels et fixés aux platines de fixation desdits profilés; une poutre transversale fixée aux extrémités avant des profilés déformables; remarquable en ce qu'il comprend, en outre, un bras fixé au groupe motopropulseur et s'étendant essentiellement transversalement ou longitudinalement jusqu'à la face arrière de la platine de fixation d'un des deux profilés structurels, de manière à exercer sur ladite platine un effort longitudinal et/ou transversal apte à favoriser une déformation latérale, vers l'extérieur, de l'extrémité avant du profilé structurel en cas d'impact sur la poutre transversale.

Selon un mode avantageux de l'invention, l'extrémité du bras en vis-à-vis de la face arrière de la platine est à distance de la dite platine avant l'impact, préférentiellement à une distance comprise entre 1 mm et 20 mm, plus préférentiellement entre 5 mm et 15 mm.

Selon un mode avantageux de l'invention, l'autre des deux profilés structurels est vierge de bras fixé au groupe motopropulseur et s'étendant jusqu'à la platine de fixation dudit autre profilé, ledit autre profilé étant préférentiellement du côté conducteur du véhicule.

Selon un mode avantageux de l'invention, le bras est un profilé généralement rectiligne dont l'extrémité en vis-à-vis de la face arrière de la platine du profilé structurel comprend une semelle d'appui, ladite semelle formant préférentiellement un angle compris entre 70° et 110°, préférentiellement entre 80° et 100°, de manière à épouser l'épaulement formé par la platine.

Le profilé du bras peut présenter un contour fermé, telle que celle d'un tube circulaire, rectangulaire, carré ou encore à chambres multiples (tel qu'un profilé réalisé par extrusion). La section du profilé peut présenter un diamètre extérieur ou moyen ou encore une largeur moyenne comprise entre 20 mm et 50 mm. L'épaisseur de paroi du profilé peut être comprise entre 1 mm et 5 mm, préférentiellement entre 2 mm et 4 mm.

Selon un mode avantageux de l'invention, le bras est fixé à une zone latérale du groupe motopropulseur, du côté du profilé structurel avec lequel il est destiné à coopérer.

Selon un mode avantageux de l'invention, le bras s'étend selon une direction moyenne dont la composante principale est perpendiculaire à l'axe longitudinal du véhicule et est fixé à une zone latérale avant du groupe motopropulseur, préférentiellement à une zone de fixation d'un alternateur dudit groupe.

Selon un mode avantageux de l'invention, la direction moyenne selon laquelle le bras s'étend comprend une composante longitudinale, dirigée vers l'avant, de manière à permettre au bras de pivoter, par rapport à sa fixation au groupe motopropulseur, vers l'arrière lors de l'impact.

Selon un mode avantageux de l'invention, le bras s'étend selon une direction dont la composante principale est dans l'axe longitudinal du véhicule et est fixé à une zone latérale du groupe motopropulseur, préférentiellement à une zone de fixation dudit groupe à la caisse du véhicule et/ou à une zone de fixation d'un support de galet tendeur de courroie dudit groupe.

Selon un mode avantageux de l'invention, la direction moyenne selon laquelle le bras s'étend comprend une composante perpendiculaire à l'axe longitudinal du véhicule, dirigée vers l'extérieur, de manière à permettre au bras de pivoter, par rapport à sa fixation au groupe motopropulseur, latéralement vers l'extérieur du véhicule lors de l'impact.

Selon un mode avantageux de l'invention, le bras est fixé en porte-à-faux au groupe moto propulseur.

De manière avantageuse, il peut être prévu de désactiver le bras à partir du moment où la signature d'un choc décalé à 40% ou moins a été détectée. Pour ce faire, des moyens électromécaniques peuvent être mise en oeuvre pour faire pivoter le bras ou du moins pour le déplacer de manière à ce qu'il évite la platine de fixation du profilé structurel.

L'invention peut également avoir pour objet un véhicule automobile comprenant la structure de l'invention.

Les mesures de l'invention sont intéressantes en ce qu'elles permettent à la structure avant de satisfaire avec un bon niveau de performance les deux tests décrits dans la partie technique antérieure, et ce avec des moyens simples et économiques. Elles permettent de conserver le comportement du côté conducteur en choc décalé côté conducteur. Le comportement du deuxième profilé structurel longitudinal (brancard), en l'occurrence celui du côté conducteur, reste en effet inchangé. Il a été optimisé pour le protocole de choc décalé côté conducteur, en l'occurrence côté gauche. Le bras déviateur peut être rapporté lors du montage du véhicule, ce qui ne remet en cause ni les interfaces d'architecture du véhicule, ni sa structure au niveau du ferrage.

D'autres caractéristiques et avantages de la présente invention seront mieux compris à l'aide de la description et des dessins parmi lesquels :
- La figure 1 illustre les conditions de test de choc frontal à 64 km/h, avec 40% de recouvrement contre une barrière déformable ;
- La figure 2 illustre les conditions de test de choc frontal à 50 km/h et 56 km/h avec 100% de recouvrement contre un mur rigide ;
- La figure 3 est une vue en élévation d'une structure avant déformable de véhicule automobile, à l'état non déformé ;
- La figure 4 illustre la structure déformable de la figure 3, à l'état déformé après un impact 100% de recouvrement ;
- La figure 5 illustre fibre neutre de la structure déformée de la figure 4 ;
- La figure 6 illustre, sur une portion droite d'une structure déformable de véhicule, le principe de fonctionnement d'un premier mode de réalisation de l'invention ;
- La figure 7 illustre trois étapes successives de déformation de la structure de la figure 6 ;
- La figure 8 illustre la portion gauche de la structure des figures 6 à 8 à l'état déformé ;
- La figure 9 est une vue de détail en perspective de l'extrémité du bras de déformation de la structure des figures 6 et 7 ;
- La figure 10 illustre la zone de fixation du bras sur le groupe motopropulseur ;
- La figure 11 illustre, sur une portion droite d'une structure déformable de véhicule, le principe de fonctionnement d'un deuxième mode de réalisation de l'invention ;
- La figure 12 illustre trois étapes successives de déformation de la structure de la figure 11 ;
- La figure 13 illustre la portion gauche de la structure des figures 11 et 12 à l'état déformé ;
- La figure 14 est une vue de détail en perspective de l'extrémité du bras de déformation de la structure des figures 11 et 12 ;
- La figure 15 illustre une première zone de fixation du bras sur le groupe motopropulseur ;
- La figure 16 illustre une deuxième zone de fixation du bras sur le groupe motopropulseur.

Les figures 1 et 2 ont déjà été décrites précédemment dans le cadre de la discussion de l'art antérieur.

Les figures 3 à 5 illustrent la déformation d'une structure avant déformable classique d'un véhicule automobile lors d'un choc avant avec recouvrement total ou essentiellement totale. Plus précisément, la figure 3 illustre la structure à l'état non déformé, la figure 4 illustre la structure à l'état déformé suite au choc et la figure 5 illustre la fibre neutre de la structure déformée selon la figure 4.

A la figure 3, la structure avant 2 de véhicule automobile comprend, essentiellement, une poutre transversale avant 4, soutenue à ses deux extrémités, par deux profilés déformables 6, communément appelés « crashboxes ». Ces profilés sont conçus pour pouvoir se déformer en formant des plis à la manière d'un accordéon, cette déformation étant également couramment désignée « bottelage ». La structure 2 comprend également deux profilés structurels longitudinaux parallèles 8a et 8b supportant les profilés déformables 6 et la poutre transversale 4. Ces profilés 8a et 8b sont communément appelés « brancards ». Une poutre transversale arrière 10 relie les deux profilés 8a et 8b. Chacun de ces profilés comprend, à sa tête ou extrémité avant, une platine de fixation 14, destinée à assurer la liaison avec les profilés déformables 6. Les portions avant 16a et 16b des profilés structurels longitudinaux 8a et 8b sont également conçues pour se déformer ou « botteler » en formant des plis à la manière d'un accordéon. Un groupe motopropulseur 12 est disposé, en l'occurrence de manière transversale, entre les deux profilés structurels longitudinaux 8a et 8b.

La figure 4 illustre la structure 2 de la figure 3 à l'état déformé suite à un choc frontal avec recouvrement total du type illustré à la figure 2. On peut observer que la poutre transversale avant 4 initialement légèrement galbée est maintenant totalement droite et s'est déplacée vers l'arrière. On peut également observer que les profilés déformables (« crashboxes ») sont complètement déformés en compression sans dévers. On peut également observer que les portions avant 16a et 16b des profilés structurels longitudinaux 8a et 8b sont également déformées en compression sans dévers. Le reste des profilés structurels longitudinaux 8a et 8b est resté essentiellement intact. En d'autres termes, cela signifie que la quasi-totalité de l'énergie du choc est absorbée par le « bottelage » des profilés déformables 6 et par les portions avant 16a et 16b des profilés structurels longitudinaux 8a et 8b.

La figure 5 illustre la fibre neutre de la structure 2 après déformation selon la figure 4. On peut observer que les profilés longitudinaux 8a et 8b ont tendance à fléchir vers l'extérieur suivant les flèches représentées, ces mouvements de flexion restant essentiellement élastiques lors du choc. Dans le cadre de ce mouvement de flexion des profilés, on peut également observer les mouvements de rotation des platines de fixation 14 qui conservent leur orientation par rapport à la fibre neutre des profilés 8a et 8b. Toujours dans le cadre de ce mouvement de flexion des profilés, la poutre transversale avant 4 se voit alors sollicitée en traction.

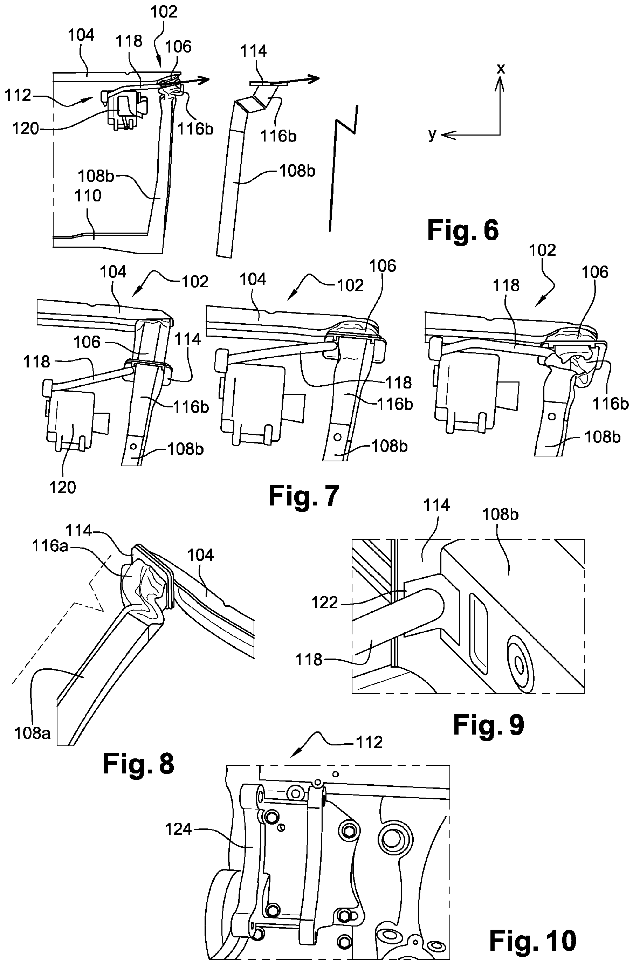

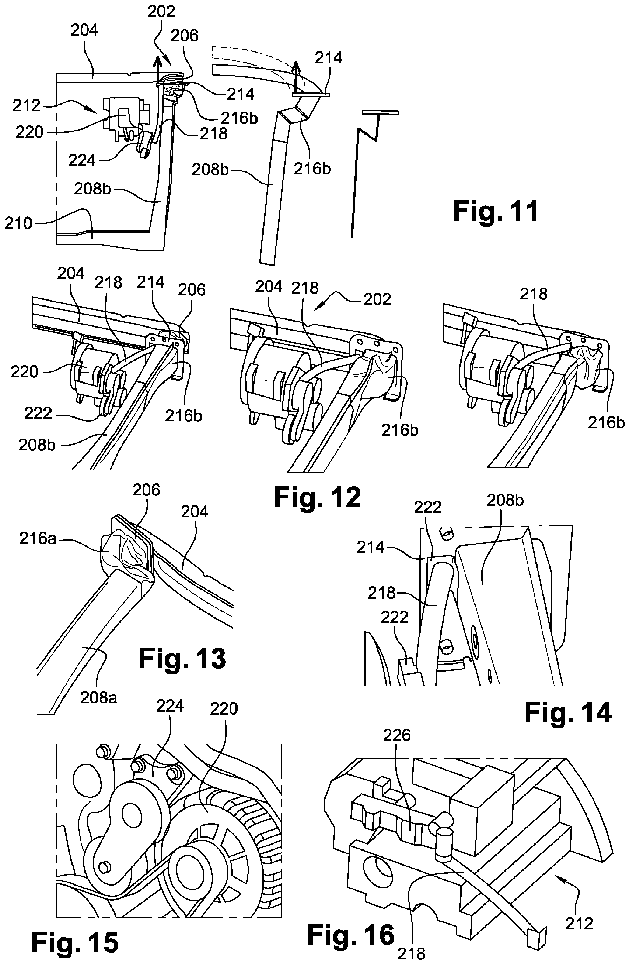

Les figures 6 à 10 illustrent un premier mode de réalisation de l'invention. Les figures 11 à 16 illustrent un deuxième mode de réalisation de l'invention. Les numéros de référence des figures 3 à 5 sont utilisés aux figures 6 à 16 pour les éléments identiques ou correspondants, ces numéros étant toutefois majorés de 100 pour le premier mode de réalisation illustré aux figures 6 à 10, et de 200 pour le deuxième mode de réalisation illustré aux figures 11 à 16. Des numéros de référence spécifiques sont toutefois utilisés pour les éléments spécifiques, ces numéros étant compris entre 100 et 200 pour le premier mode et entre 200 et 300 pour le deuxième mode.

Le premier mode de réalisation va être décrit en référence aux figures 6 à 10.

La figure 6 illustre le principe du premier mode de réalisation de l'invention. L'image de gauche de la figure 6 illustre la portion droite de la structure avant déformable 102, conforme à l'invention, à l'état déformé. On peut observer qu'elle comprend un bras 118 supporté par le groupe motopropulseur 112 (non représenté) à proximité de son alternateur 120. Ce bras 118 s'étend essentiellement transversalement, c'est-à-dire dans une direction perpendiculaire à l'axe longitudinal du véhicule, et vient en contact avec l'extrémité avant du profilé structurel longitudinal droit 108b. Ce bras est configuré pour exercer un effort dirigé transversalement vers l'extérieur sur la portion avant 116b de profilé longitudinal 108b de manière à favoriser son déversement vers l'extérieur. Cette déformation est illustrée à l'image centrale de la figure 6. Cette image représente le profilé seul et montre de manière schématique la déformation en dévers de la portion avant 116b, apte à favoriser le cisaillement et donc la déformation du profilé. L'image de droite de la figure 6 illustre la fibre neutre du profilé de l'image centrale.

L'exercice d'un effort majoritairement suivant la direction y perpendiculaire à la direction x correspondant à l'axe longitudinal du véhicule est par conséquent favorable à une déformation en cisaillement de la portion avant du profilé, cette déformation permettant alors d'absorber l'énergie du choc avec des décélérations plus limitées compte tenu de la distance de déformation plus grande.

Les trois images de la figure 7 illustrent différentes étapes de déformation de la structure de la figure 6. L'image de gauche illustre la structure avant déformation. On peut observer que le bras 118 s'étend suivant une direction présentant une composante majoritaire selon y et une composante minoritaire suivant x. Il s'étend depuis la zone de fixation de l'alternateur vers l'avant et l'extérieur du véhicule jusqu'à la face arrière de la platine de fixation 114 en tête du profilé longitudinal 108b. L'image centrale illustre la structure à une étape intermédiaire de déformation lors d'un choc frontal à recouvrement total conforme à la figure 2. La poutre transversale avant 104 s'est déplacée vers l'arrière, comprimant le profilé déformable 106. L'image de droite illustre la structure en fin de déformation. La portion avant 116b du profilé structurel longitudinal droit 108b s'est déformée en cisaillement grâce à l'effort dirigé vers l'extérieur exercé par le bras 118. Ce dernier a pivoté vers l'arrière par rapport à sa fixation sur le groupe motopropulseur. Cette image montre bien la déformation avantageuse de la portion avant 116b dans le cadre d'un tel choc, apte à absorber davantage d'énergie.

La figure 8 illustre le profilé structurel longitudinal gauche 108a en fin de déformation de la structure lors d'un choc frontal à recouvrement total conforme à la figure 2. La portion avant 116a portée par le profilé longitudinal gauche 108a se voit elle aussi déformée par cisaillement. Ce phénomène est une conséquence du déversement extérieur de la portion avant droit 116b. En effet, la fibre neutre de la structure 2 ne se voit pas déformée comme « un arc qui se tend » illustré à la figure 5, mais se voit déformée par cisaillement : Le premier cisaillement est déclenché par le bras du côté droit comme cela a été décrit en relation avec la figure 7. Il induit un second cisaillement du côté gauche, représenté schématiquement à la gauche de l'image de la figure 8 par une fibre neutre cisaillée dans la portion 116a du profilé. La poutre transversale 4 légèrement galbée comme décrit en relation avec la figure 3, se voit droite après déformation et donc allongée dans la direction transversale du véhicule. Cet allongement de la poutre 104 est facilité par le cisaillement du profilé gauche 108a qui libère la possibilité d'un déplacement transversal vers l'extérieur de la platine de fixation 114.

La déformation désaxée du profilé 108a présente donc de manière induite de meilleures caractéristiques de décélération que celles obtenues par la déformation en ligne. Avantageusement, en cas de choc frontal avec recouvrement partiel gauche, le bras situé à droite ne rentre pas, en l'occurrence, en contact avec la structure. Cela signifie qu'en cas de choc frontal avec recouvrement partiel, comme illustré à la figure 1, le côté gauche de la structure conserve toujours une capacité d'absorption d'énergie inchangée et apte à remplir les conditions du test.

La figure 9 est une vue de détail en perspective de l'extrémité du bras de déformation de la structure des figures 6 et 7. On peut observer que l'extrémité du bras comprend une semelle d'appui 122 formant un angle proche d'un angle droit, de manière à épouser la face latérale du profilé 108b et la face arrière adjacente de la platine 114. L'extrémité du bras est à distance de la platine et du profilé, comme par exemple à une distance comprise entre 1 mm et 20 mm, plus préférentiellement entre 5 mm et 15 mm.

Le bras 118 est préférentiellement un profilé généralement rectiligne. Il peut toutefois être légèrement galbé ou cintré en fonction de divers paramètres comme notamment l'encombrement et/ou la résistance au flambement. Le profilé du bras est préférentiellement métallique, comme par exemple de l'acier ou de l'aluminium.

La figure 10 illustre la zone de fixation du support 124 d'alternateur 120 sur le bloc moteur 112. Le bras peut alors assez aisément y être fixé au moyen notamment d'une patte ou platine de fixation qui est alors fixée au bloc via les vis de fixation du support 124.

Le deuxième mode de réalisation va être décrit en référence aux figures 11 à 16.

La figure 11 illustre le principe du deuxième mode de réalisation de l'invention. L'image de gauche de la figure 11 illustre la portion droite de la structure avant déformable 202, conforme à l'invention, à l'état déformé. Le dispositif 202 comprend un bras 218 s'étendant essentiellement longitudinalement depuis un point d'ancrage sur le groupe motopropulseur 212, en l'occurrence une portion latérale 224, vers la face arrière de la platine de fixation 214 à la tête du profilé 208b. On peut observer qu'à l'état déformé, le bras exerce un effort essentiellement dirigé vers l'avant sur la gauche de la platine 214, l'empêchant ainsi de pivoter comme cela a été décrit en relation avec la figure 5. En empêchant ou limitant ce pivotement, la déformation de la portion avant 216b du profilé 208b vers l'extérieur est ainsi favorisée. L'image centrale de la figure 11 illustre le profilé seul 208b, plus particulièrement sa déformation en dévers et cisaillement grâce à l'influence du bras 218 sur la platine 214. L'image de droite de la figure 11 illustre la fibre neutre du profilé de l'image centrale.

L'exercice d'un effort majoritairement suivant la direction x longitudinale du véhicule à l'arrière de la platine de fixation, du côté intérieur, est par conséquent favorable à une déformation en cisaillement de la portion avant du profilé, cette déformation permettant alors d'absorber l'énergie du choc avec des décélérations plus limitées compte tenu de la distance de déformation plus grande.

Les trois images de la figure 12 illustrent différentes étapes de déformation de la structure de la figure 11. L'image de gauche illustre la structure avant déformation. On peut observer que le bras 218 s'étend suivant une direction présentant une composante majoritaire selon x et une composante minoritaire suivant y. Il s'étend depuis une zone latérale du moteur, proche de la fixation de l'alternateur, vers l'avant et l'extérieur du véhicule jusqu'à la face arrière de la platine de fixation 114 en tête du profilé longitudinal 108b. L'image centrale illustre la structure à une étape intermédiaire de déformation lors d'un choc frontal à recouvrement total conforme à la figure 2. La poutre transversale avant 204 s'est déplacée vers l'arrière, comprimant le profilé déformable 206. L'image de droite illustre la structure en fin de déformation. La portion avant 216b du profilé structurel longitudinal droit 208b s'est déformée en cisaillement grâce à l'effort dirigé vers l'avant exercé par le bras 218. Ce dernier a pivoté et/ou s'est déformé en flexion vers l'extérieur par rapport à sa fixation sur le groupe motopropulseur. Cette image montre bien la déformation avantageuse de la portion avant 216b dans le cadre d'un tel choc, apte à absorber davantage d'énergie.

La figure 13 illustre le profilé structurel longitudinal gauche 208a en fin de déformation de la structure lors d'un choc frontal à recouvrement total conforme à la figure 2. La portion avant 216a portée par le profilé longitudinal gauche 208a se voit elle aussi déformée par cisaillement. Ce phénomène est une conséquence du déversement extérieur de la portion avant droit 216b de la même manière que cela a été décrit en relation avec la figure 8 illustrant la déformation de la structure de gauche selon le premier mode de réalisation.

La déformation désaxée du profilé 208a présente donc de manière induite de meilleures caractéristiques de décélération que celles obtenues par la déformation en ligne. Avantageusement, en cas de choc frontal avec recouvrement partiel gauche, le bras situé à droite ne rentre pas, en l'occurrence, en contact avec la structure. Cela signifie qu'en cas de choc frontal avec recouvrement partiel, comme illustré à la figure 1, le côté gauche de la structure conserve toujours une capacité d'absorption d'énergie inchangée et apte à remplir les conditions du test.

La figure 14 est une vue de détail en perspective de l'extrémité du bras de déformation de la structure des figures 11 et 12. On peut observer que l'extrémité du bras comprend une semelle d'appui 222 formant un angle proche d'un angle droit, de manière à épouser la face latérale du profilé 208b et la face arrière adjacente de la platine 214. L'extrémité du bras est à distance de la platine et du profilé, comme par exemple à une distance comprise entre 1 mm et 20 mm, plus préférentiellement entre 5 mm et 15 mm.

La figure 15 est une vue de détail de la face latérale avant du groupe motopropulseur, du côté droit. On peut y identifier l'alternateur 220 ainsi qu'un support 224 de galet tendeur de courroie de l'alternateur. La zone de fixation de ce support au bloc moteur peut constituer un point d'ancrage intéressant pour le bras 218.

La figure 16 illustre le groupe motopropulseur 212 et une pièce de fixation 226 dudit groupe à la structure du véhicule. Cette pièce peut être adaptée pour soutenir le bras 218 comme cela est illustré à la figure.

Similairement à ce qui a été mentionné en relation avec le premier mode de réalisation de l'invention, le bras 218 est préférentiellement un profilé généralement rectiligne. Il peut toutefois être légèrement galbé ou cintré, il est préférentiellement métallique, comme par exemple en acier ou en aluminium.

## Revendications

1. Structure avant (102 ; 202) de véhicule automobile comprenant :
- deux profilés structurels longitudinaux (108a, 108b ; 208a, 208b) s'étendant de manière essentiellement parallèle à l'avant du véhicule, avec des platines de fixation (114 ; 214) à leurs extrémités avant ;
- un groupe motopropulseur (112 ; 212) disposé entre les deux profilés structurels longitudinaux (108a, 108b ; 208a, 208b) ;
- deux profilés déformables (106 ; 206) s'étendant, respectivement, dans le prolongement avant des profilés structurels (108a, 108b ; 208a, 208b) et fixés aux platines de fixation (114 ; 214) desdits profilés ;
- une poutre transversale (104 ; 204) fixée aux extrémités avant des profilés déformables (106 ; 206) ;
**caractérisée en ce qu'**il comprend, en outre :
un bras (118 ; 218) fixé au groupe motopropulseur (112 ; 212) et s'étendant essentiellement transversalement ou longitudinalement jusqu'à la face arrière de la platine de fixation (114 ; 214) d'un (108b ; 208b) des deux profilés structurels (108a, 108b ; 208a, 208b), de manière à exercer sur ladite platine (114, 214) un effort longitudinal et/ou transversal apte à favoriser une déformation latérale, vers l'extérieur, de l'extrémité avant (116b ; 216b) du profilé structurel (108b ; 208b) en cas d'impact sur la poutre transversale (104 ; 204).

2. Structure avant (102 ; 202) selon la revendication 1, **caractérisée en ce que** l'extrémité du bras (118 ; 218) en vis-à-vis de la face arrière de la platine (114, 214) est à distance de la dite platine avant l'impact, préférentiellement à une distance comprise entre 1 mm et 20 mm, plus préférentiellement entre 5 mm et 15 mm.

3. Structure avant (102 ; 202) selon l'une des revendications 1 et 2, **caractérisée en ce que** l'autre (108a, 208a) des deux profilés structurels (108a, 108b ; 208a, 208b) est vierge de bras fixé au groupe motopropulseur et s'étendant jusqu'à la platine de fixation dudit autre profilé, ledit profilé (108a ; 208a) étant préférentiellement du côté conducteur du véhicule.

4. Structure avant (102 ; 202) selon l'une des revendications 1 à 3, **caractérisée en ce que** le bras (118, 218) est un profilé généralement rectiligne dont l'extrémité en vis-à-vis de la face arrière de la platine (114 ; 214) du profilé structurel (108b ; 208b) comprend une semelle d'appui (122, 222), ladite semelle formant préférentiellement un angle compris entre 70° et 110°, préférentiellement entre 80° et 100°, de manière à épouser l'épaulement formé par la platine.

5. Structure avant (102 ; 202) selon l'une des revendications 1 à 4, **caractérisée en ce que** le bras (118 ; 218) est fixé à une zone latérale du groupe motopropulseur (112 ; 212) du côté du profilé structurel avec lequel il est destiné à coopérer.

6. Structure avant (102) selon l'une des revendications 1 à 5, **caractérisée en ce que** le bras (118) s'étend selon une direction moyenne dont la composante principale est perpendiculaire à l'axe longitudinal du véhicule et est fixé à une zone latérale avant du groupe motopropulseur (112), préférentiellement à une zone de fixation d'un alternateur (120) dudit groupe.

7. Structure avant (102) selon la revendication 6, **caractérisée en ce que** la direction moyenne selon laquelle le bras (118) s'étend comprend une composante longitudinale dirigée vers l'avant de manière à permettre au bras de pivoter, par rapport à sa fixation au groupe motopropulseur (112), vers l'arrière lors de l'impact.

8. Structure avant (202) selon l'une des revendications 1 à 5, **caractérisée en ce que** le bras (218) s'étend selon une direction dont la composante principale est dans l'axe longitudinal du véhicule et est fixé à une zone latérale du groupe motopropulseur (212), préférentiellement à une zone de fixation (226) dudit groupe à la caisse du véhicule et/ou à une zone de fixation (224) d'un support de galet tendeur de courroie dudit groupe.

9. Structure avant (202) selon la revendication 8, **caractérisée en ce que** la direction moyenne selon laquelle le bras (218) s'étend comprend une composante perpendiculaire à l'axe longitudinal du véhicule, dirigée vers l'extérieur, de manière à permettre au bras de pivoter, par rapport à sa fixation au groupe motopropulseur (212), latéralement vers l'extérieur du véhicule lors de l'impact.

10. Structure avant (102 ; 202) selon l'une des revendications 1 à 9, **caractérisée en ce que** le bras (118 ; 218) est fixé en porte-à-faux au groupe motopropulseur (112 ; 212).

## Patentansprüche

1. Kraftfahrzeug-Frontstruktur (102; 202), umfassend:
- zwei Längsstrukturprofile (108a, 108b; 208a, 208b), die sich im Wesentlichen parallel zu der Vorderseite des Fahrzeugs erstrecken, mit Befestigungsplatten (114; 214) an ihren vorderen Enden;
- ein Antriebsaggregat (112; 212), das zwischen den zwei Längsstrukturprofilen (108a, 108b; 208a, 208b) angeordnet ist;
- zwei verformbare Profile (106; 206), die sich jeweils in der vorderen Verlängerung der Strukturprofile (108a, 108b; 208a, 208b) erstrecken und an den Befestigungsplatten (114; 214) der Profile befestigt sind;
- einen Querträger (104; 204), der an den vorderen Enden der verformbaren Profile (106; 206) befestigt ist;
**dadurch gekennzeichnet, dass** sie außerdem Folgendes umfasst:
einen Arm (18; 218), der an dem Antriebsaggregat (112; 212) befestigt ist und sich im Wesentlichen quer oder längs bis zu der Rückseite der Befestigungsplatte (114; 214) eines (108b; 208b) der zwei Strukturprofile (108a, 108b; 208a, 208b) derart erstreckt, dass auf die Platte (114, 214) eine Längs- und/oder Querkraft ausgeübt wird, die geeignet ist, um eine seitliche Verformung nach außen des vorderen Endes (116b; 216b) des Strukturprofils (108b; 208b) im Fall eines Aufpralls auf dem Querträger (104; 204) zu begünstigen.

2. Frontstruktur (102; 202) nach Anspruch 1, **dadurch gekennzeichnet, dass** das Ende des Arms (118; 218) gegenüber der Rückseite der Platte (114, 214) von der Platte vor dem Aufprall bevorzugt um einen Abstand zwischen 1 mm und 20 mm, bevorzugter zwischen 5 mm und 15 mm beabstandet ist.

3. Frontstruktur (102; 202) nach einem der Ansprüche 1 und 2, **dadurch gekennzeichnet, dass** das andere (108a, 208a) der zwei Strukturprofile (108a, 108b; 208a, 208b) keinen Arm an dem Antriebsaggregat befestigt hat und sich bis zu der Befestigungsplatte des anderen Profils erstreckt, wobei das Profil (108a; 208) bevorzugt auf der Fahrerseite des Fahrzeugs liegt.

4. Frontstruktur (102; 202) nach einem der Ansprüche 1 bis 3, **dadurch gekennzeichnet, dass** der Arm (118, 218) ein im Allgemeinen geradliniges Profil ist, dessen Ende gegenüber der Rückseite der Platte (114; 214) des Strukturprofils (108b; 208b) eine Auflagesohle (122, 222) umfasst, wobei die Sohle bevorzugt einen Winkel zwischen 70° und 110°, bevorzugt zwischen 80 und 100° bildet, so dass sie sich an den von der Platte gebildeten Ansatz legt.

5. Frontstruktur (102; 202) nach einem der Ansprüche 1 bis 4, **dadurch gekennzeichnet, dass** der Arm (118; 218) an einer seitlichen Zone des Antriebsaggregats (112; 212) auf der Seite des Strukturprofils, mit dem er zusammenwirken soll, befestigt ist.

6. Frontstruktur (102) nach einem der Ansprüche 1 bis 5, **dadurch gekennzeichnet, dass** sich der Arm (118) entlang einer mittleren Richtung erstreckt, deren Hauptkomponente zu der Längsachse des Fahrzeugs senkrecht ist und an einer seitlichen vorderen Zone des Antriebsaggregats (112), bevorzugt an einer Befestigungszone der Lichtmaschine (120), des Aggregats befestigt ist.

7. Frontstruktur (102) nach Anspruch 6, **dadurch gekennzeichnet, dass** die mittlere Richtung, entlang welcher sich der Arm (118) erstreckt, eine Längskomponente umfasst, die derart nach vorn gerichtet ist, dass sie es dem Arm erlaubt, in Bezug auf seine Befestigung an dem Antriebsaggregat (112) bei dem Aufprall nach hinten zu schwenken.

8. Frontstruktur (202) nach einem der Ansprüche 1 bis 5, **dadurch gekennzeichnet, dass** sich der Arm (218) entlang einer Richtung erstreckt, deren Hauptkomponente in der Längsachse des Fahrzeugs liegt, und dass er an einer seitlichen Zone des Antriebsaggregats (212), bevorzugt an einer Befestigungszone (226) des Aggregats an der Karosserie des Fahrzeugs, und/oder an einer Befestigungszone (224) eines Riemenspannrollenträgers des Aggregats befestigt ist.

9. Frontstruktur (202) nach Anspruch 8, **dadurch gekennzeichnet, dass** die mittlere Richtung, entlang welcher sich der Arm (218) erstreckt, eine Komponente senkrecht zu der Längsachse des Fahrzeugs umfasst, die derart nach außen gerichtet ist, dass sie es dem Arm erlaubt, in Bezug auf seine Befestigung an dem Antriebsaggregat (212) bei dem Aufprall seitlich zur Außenseite des Fahrzeugs zu schwenken.

10. Frontstruktur (102; 202) nach einem der Ansprüche 1 bis 9, **dadurch gekennzeichnet, dass** der Arm (118; 218) auskragend an dem Antriebsaggregat (112; 212) befestigt ist.

## Claims

1. A front structure (102; 202) of a motor vehicle including:
- two longitudinal structural profiles (108a, 108b; 208a, 208b) extending in an essentially parallel manner towards the front of the vehicle, with attaching plates (114; 214) at their front ends;
- a powertrain (112; 212) disposed between the two longitudinal structural profiles (108a, 108b; 208a, 208b);
- two deformable profiles (106; 206) extending, respectively, in the front extension of the structural profiles (108a, 108b; 208a, 208b) and attached to the attaching plates (114; 214) of said profiles;
- a transverse beam (104; 204) attached to the front ends of the deformable profiles (106; 206);
**characterized in that** it includes, in addition:
an arm (118; 218) attached to the powertrain (112; 212) and extending essentially transversely or longitudinally up to the rear face of the attaching plate (114; 214) of one (108b; 208b) of the two structural profiles (108a, 108b; 208a, 208b), so as to exert on said plate (114, 214) a longitudinal and/or transverse force able to promote a lateral deformation, towards the exterior, of the front end (116b; 216b) of the structural profile (108b; 208b) in the event of an impact on the transverse beam (104; 204) .

2. The front structure (102; 202) according to Claim 1, **characterized in that** the end of the arm (118; 218) facing the rear face of the plate (114, 214) is at a distance from said plate before the impact, preferably at a distance comprised between 1 mm and 20 mm, more preferably between 5 mm and 15 mm.

3. The front structure (102; 202) according to one of Claims 1 and 2, **characterized in that** the other (108a, 208a) of the two structural profiles (108a, 108b; 208a, 208b) is free of an arm fixed to the powertrain and extending up to the attaching plate of said other profile, said profile (108a; 208a) being preferably on the driver's side of the vehicle.

4. The front structure (102; 202) according to one of Claims 1 to 3, **characterized in that** the arm (118, 218) is a generally rectilinear profile, the end of which, facing the rear face of the plate (114; 214) of the structural profile (108b; 208b) includes a support baseplate (122, 222), said baseplate preferably forming an angle comprised between 70° and 110°, preferably between 80° and 100°, so as to adapt itself to the shoulder formed by the plate.

5. The front structure (102; 202) according to one of Claims 1 to 4, **characterized in that** the arm (118; 218) is attached to a lateral zone of the powertrain (112; 212) on the side of the structural profile with which it is intended to cooperate.

6. The front structure (102) according to one of Claims 1 to 5, **characterized in that** the arm (118) extends along a mean direction, the principal component of which is perpendicular to the longitudinal axis of the vehicle and is attached to a front lateral zone of the powertrain (112), preferably to an attaching zone of an alternator (120) of said powertrain.

7. The front structure (102) according to Claim 6, **characterized in that** the mean direction along which the arm (118) extends includes a longitudinal component directed toward the front so as to permit the arm to pivot, with respect to its attachment to the powertrain (112), towards the rear during the impact.

8. The front structure (202) according to one of Claims 1 to 5, **characterized in that** the arm (218) extends along a direction, the principal component of which is in the longitudinal axis of the vehicle and is attached to a lateral zone of the powertrain (212), preferably to an attachment zone (226) of said powertrain to the body of the vehicle and/or to an attachment zone (224) of a belt tensioning roller support of said powertrain.

9. The front structure (202) according to Claim 8, **characterized in that** the mean direction along which the arm (218) extends includes a component perpendicular to the longitudinal axis of the vehicle, directed towards the exterior, so as to permit the arm to pivot, with respect to its attachment to the powertrain (212), laterally towards the exterior of the vehicle during the impact.

10. The front structure (102; 202) according to one of Claims 1 to 9, **characterized in that** the arm (118; 218) is attached in a cantilevered manner to the powertrain (112; 212).
